# EUROPÄISCHE PATENTANMELDUNG

(11) **EP 1 316 378 A2**
(43) Veröffentlichungstag der Anmeldung: **04.06.2003**
(21) Anmeldenummer: 02026878.5
(22) Anmeldetag: 02.12.2002
(51) Int. Cl.: B23D 57/00

(54) **Translatorisch arbeitendes Werkzeug**

(30) Priorität: 03.12.2001 DE 10159228
(71) Anmelder: Ib Metallbearbeitungs GmbH, 81539 München (DE)
(72) Erfinder: Ihl, Martin, 82008 Unterhaching (DE); Purger, Wolfgang, 81377 München (DE)
(74) Vertreter: Schlimme, Wolfram, Dr.-Ing.

(57) **Zusammenfassung**

Ein translatorisch arbeitendes Werkzeug für eine Rotationswerkzeugmaschine (5) weist ein Werkzeuggehäuse (1), eine um eine Rotationsachse (X) drehbare Getriebeeingangswelle (20), die mit der Rotationswerkzeugmaschine (5) zum drehbaren Antrieb koppelbar ist, ein von der Getriebeeingangswelle (20) beaufschlagtes Umlenkgetriebe (2) zur Umlenkung der Rotationsbewegung der Getriebeeingangswelle (20) in eine Translationsbewegung quer zur Rotationsachse (X), eine vom Umlenkgetriebe (2) beaufschlagte Translationseinrichtung (3) und eine mit der Translationseinrichtung (3) koppelbare hin und her bewegbare Werkzeugaufnahme (32) für ein translatorisch arbeitendes Werkzeugelement (4) auf. Dabei ist die Werkzeugaufnahme (22) so ausgestaltet, daß die Werkstück-Bearbeitungsbereiche (40) eines in die Werkzeugaufnahme (32) eingespannten Werkzeugelements (4) beiderseits der Rotationsachse (X) gelegen sind, so daß eine Bearbeitung eines Werkstücks (6) beiderseits der Rotationsachse (X) erfolgen kann.

## Beschreibung

Die Erfindung betrifft ein translatorisch arbeitendes Werkzeug für eine Rotationswerkzeugmaschine gemäß dem Oberbegriff des Patentanspruchs 1 sowie ein translatorisch arbeitendes Werkzeug für eine Werkzeugmaschine gemäß dem Oberbegriff des Patentanspruchs 8.

Werkzeuge für Rotationswerkzeugmaschinen, die die Rotationsbewegung in eine Translationsbewegung parallel zur Rotationsachse umsetzen, sind bereits bekannt. So offenbaren beispielsweise die DE 195 08 670 A1, die DE 94 01 382 U1, die US 1,808,228 A und die US 3,876,015 A Stichsäge-Vorsatzwerkzeuge für Handbohrmaschinen, bei denen die Bewegungsrichtung des Stichsägeblatts parallel zur Rotationsachse des Bohrmaschinenantriebs verläuft. Bei einem Stichsäge-Vorsatzwerkzeug gemäß der US 6,138,634 A ist die Bewegungsrichtung der Stichsäge um eine Querachse zur Rotationsachse verschwenkbar. Bei einem gattungsbildenden Stichsäge-Vorsatzwerkzeug gemäß der EP 1 104 690 A1 verläuft die Bewegungsrichtung der Stichsäge in einem spitzen Winkel quer zur Rotationsachse.

Die Umsetzung der Rotationsbewegung in eine Translationsbewegung erfolgt im Stand der Technik entweder über federbeaufschlagte Nocken (DE 94 01 382 U1), Kulissenführungen (US 1,808,228 A und DE 195 08 670 A1) oder eine Exzenterkinematik (US 6,138,364 A und EP 1 104 690 A1).

Die vorgenannten Lösungen des Standes der Technik erfordern eine aufwendige Montage des Vorsatzwerkzeugs an der jeweiligen Handbohrmaschine, insbesondere zur Vermeidung des Mitrotierens des Vorsatzwerkzeugs, wobei die Lösung der gattungsbildenden EP 1 104 690 A1 ein integriertes Werkzeugkonzept darstellt, welches bereits vom Hersteller des Rotationswerkzeugs in allen seinen Varianten entwickelt werden muß. Eine Nachrüstung vorhandener Rotationswerkzeuge ist damit nicht möglich.

Bei rotatorisch arbeitenden Werkzeugmaschinen, insbesondere bei CNC-Werkzeugmaschinen, ist es problematisch, Bearbeitungsschritte durchzuführen, die eine Formgebung des zu bearbeitenden Werkstücks quer zur Rotationsrichtung des Werkzeugmaschinenantriebs ermöglichen. Dieses Problem tritt insbesondere dann auf, wenn ein rotatorisch bearbeitetes Werkstück mit einem quer oder rechtwinklig zur Rotationsachse verlaufenden Schlitz zu versehen ist, wie dies beispielsweise bei Schraubverbindungen erforderlich ist, um später den Angriff eines Schraubwerkzeugs am Werkstück zu ermöglichen. Bislang war es erforderlich, diesen Schlitz in einem getrennten Bearbeitungsschritt in das Werkstück einzubringen. Lediglich bei der Bearbeitung des Werkstücks mittels sehr hochwertiger und damit in der Anschaffung sehr teurer Werkzeugmaschinen konnte mit einer rotierenden Säge oder einem rotierenden Fräser und einer seitlichen Verschiebung des Rotationswerkzeugs quer zur Rotationsachse auf verhältnismäßig aufwendige Weise der gewünschte Querschlitz angebracht werden.

Auch bei Werkzeugmaschinen bei denen, im Gegensatz zur vorstehend beschriebenen Rotationswerkzeugmaschnie, nur der Werkstückhalter rotierbar antreibbar ist, die also keinen drehbar angetriebenen Werkzeughalter aufweisen, kann es erforderlich sein, die vorgenannten Bearbeitungsschritte zu einer Formgebung des zu bearbeitenden Werkstücks quer zur Rotationsrichtung des Werkstückhalters der Werkzeugmaschine ermöglichen.

Aufgabe der vorliegenden Erfindung ist es, eine effizientere Bearbeitung derartiger Werkstücke zu ermöglichen und dazu ein translatorisch arbeitendes Werkzeug sowohl für eine Rotationswerkzeugmaschine mit drehbar angetriebenem Werkzeughalter als auch für eine Werkzeugmaschine mit nicht drehbar angetriebenem Werkzeughalter anzugeben, welches mit einer reduzierten Anzahl von Arbeitsschritten und auf schnellere Weise die Ausbildung eines quer zur Rotationsachse verlaufenden Schlitzes an einem an sich rotatorisch zu bearbeitenden Werkstück ermöglicht.

Diese Aufgabe wird bei einer Werkzeugmaschine mit angetriebenem Werkzeughalter gemäß Patentanspruchs 1 dadurch gelöst, daß die Werkzeugaufnahme so ausgestaltet ist, daß die Werkstück-Bearbeitungsbereiche eines in die Werkzeugaufnahme eingespannten Werkzeugs beiderseits der Rotationsachse gelegen sind, so daß eine Bearbeitung des Werkstücks beiderseits der Rotationsachse erfolgen kann.

Durch diese erfindungsgemäße Ausgestaltung der Werkzeugaufnahme ist es möglich, in einem Arbeitsgang ohne Umspannen des Werkstücks oder ohne Lateralbewegung des Rotationswerkzeugs oder des Werkstücks beiderseits der Rotationsachse eine gleichzeitige Bearbeitung des Werkstücks vorzunehmen. Auf diese Weise kann beispielsweise bei Verwendung eines Sägeblatts als eingespanntem Werkzeugelement ein Querschlitz an einer Stirnseite des zu bearbeitenden Werkstücks in einem Arbeitsgang gesägt werden.

Vorteilhaft ist es, wenn die Bewegungsrichtung der Translationseinrichtung in einer rechtwinklig zur Rotationsachse liegenden Ebene oder zu dieser Ebene geringfügig geneigt verläuft.

Weiter vorteilhaft ist es, wenn das Umlenkgetriebe einen von der Getriebeeingangswelle angetriebenen Exzenter aufweist und wenn die Translationseinrichtung einen mit dem Exzenter zusammenwirkenden hin und her bewegbaren Kulissenschlitten aufweist. Eine derartige Umlenkung der Rotationsbewegung in eine Translationsbewegung ist für das erfindungsgemäße Werkzeug besonders geeignet.

Vorzugsweise ist das Werkzeug als Vorsatzwerkzeug für ein Rotationswerkzeug ausgebildet.

Eine bevorzugte Weiterbildung davon besteht darin, daß das Werkzeuggehäuse mit einem abnehmbaren Adapterelement versehen ist, das drehfest an der Rotationswerkzeugmaschine anbringbar ist.

Besonders bevorzugt ist dabei eine Lösung, bei der die Rotationswerkzeugmaschine eine CNC-Maschine ist und ein auswechselbares Grundwerkzeug aufweist und bei der das Adapterelement am Grundwerkzeug drehfest anbringbar ist. Diese Ausgestaltung ermöglicht es, eine Mehrzahl von Grundwerkzeugen der CNC-Maschine mittels Adapterplatten zu versehen, ohne daß diese Grundwerkzeuge in ihren ursprünglichen Einsatzmöglichkeiten eingeschränkt werden. Sie können weiterhin als Grundwerkzeuge für alle möglichen Rotationsbearbeitungen mittels der CNC-Maschine verwendet werden, können aber ebenso mit einem Vorsatzwerkzeug gemäß der Erfindung durch dessen einfache Montage an der Adapterplatte versehen werden. Diese Lösung bietet darüber hinaus den Vorteil, daß nur die Adapterplatten an unterschiedliche Rotationswerkzeugmaschinen beziehungsweise Grundwerkzeuge unterschiedlicher CNC-Maschinen angepaßt werden müssen, während der Rest des Vorsatzwerkzeugs eine Standardkonstruktion darstellt, die an unterschiedlichen Rotationswerkzeugmaschinen beziehungsweise CNC-Maschinen mittels der entsprechenden Adapterplatte anbringbar ist.

Dabei ist vorzugsweise die Getriebeeingangswelle so ausgebildet, daß sie in ein Spannfutter der Rotationswerkzeugmaschine, insbesondere des Grundwerkzeugs, zur drehbaren Koppelung mit der Rotationswerkzeugmaschine beziehungsweise dem Grundwerkzeug einspannbar ist.

Für eine Werkzeugmaschine mit nicht angetriebenem Werkzeughalter wird die eingangs gestellte Aufgabe durch die im Patentanspruch 8 angegebene Merkmale gelöst.

Insbesondere vorteilhaft ist dabei, wenn das Antriebselement ein von einem strömenden Bearbeitungs- oder Kühlfluid der Werkzeugmaschine zur Durchführung einer Rotationsbewegung beaufschlagtes Rotationsantriebselement ist. Hierdurch wird ein angetriebenes Werkzeug geschaffen, welches die im Bereich der Werkzeugaufnahme bei jeder Werkzeugmaschine vorhandene Fluidversorgung für ein Bearbeitungs- oder Kühlfluid nutzt, um der Strömungsenergie des Fluids die Antriebsenergie für das Werkzeug zu entziehen. Es kann somit auf eine separate Energieversorgung für einen Werkzeugantrieb, beispielsweise eine elektrische Energieversorgung, verzichtet werden. Dieses translatorisch arbeitende Werkzeug kann daher problemlos bei vorhandenen Werkzeugmaschinen mit nicht angetriebenem Werkzeughalter eingesetzt werden, wodurch eine Nachrüstung vorhandener Werkzeugmaschinen ohne weiteres möglich ist.

Vorteilhafte Fluid-Antriebe für das Werkzeug sind in den weiteren Unteransprüchen angegeben.

Die Erfindung wird nachfolgend anhand eines Beispiels unter Bezugnahme auf die Zeichnung näher erläutert. In dieser zeigt:
- **Fig. 1.**: einen teilweise geschnittenen Vertikalschnitt durch ein erfindungsgemäßes Werkzeug entlang der Linie I-I in Fig. 2,
- Fig. 2.: einen teilweise geschnittenen Vertikalschnitt durch das erfindungsgemäße Werkzeug entlang der Linie II-II in Fig. 1 und
- Fig. 3.: eine alternative Ausführungsform des erfindungsgemäßen Werkzeugs mit einem Fluid-Antrieb.

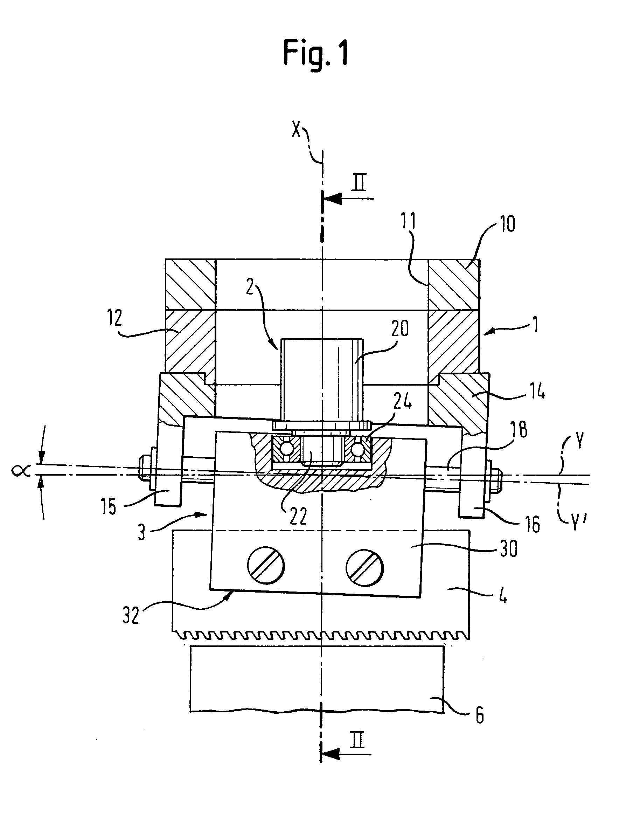

In Fig. 1 ist ein erfindungsgemäßes Werkzeug als Vorsatzwerkzeug für eine Rotationswerkzeugmaschine 5 in einem Vertikalschnitt dargestellt. Das Vorsatzwerkzeug umfaßt ein Werkzeuggehäuse 1, ein im Werkzeuggehäuse 1 angeordnetes Umlenkgetriebe 2 und eine Translationseinrichtung 3, in der als Werkzeugelement ein Sägewerkzeug 4 gehaltert ist. Anstelle des Sägewerkzeugs 4 lassen sich auch andere translatorisch arbeitende Werkzeugelemente wie zum Beispiel Stoßwerkzeuge, Feilen oder ähnliches an der Translationseinrichtung 3 anbringen.

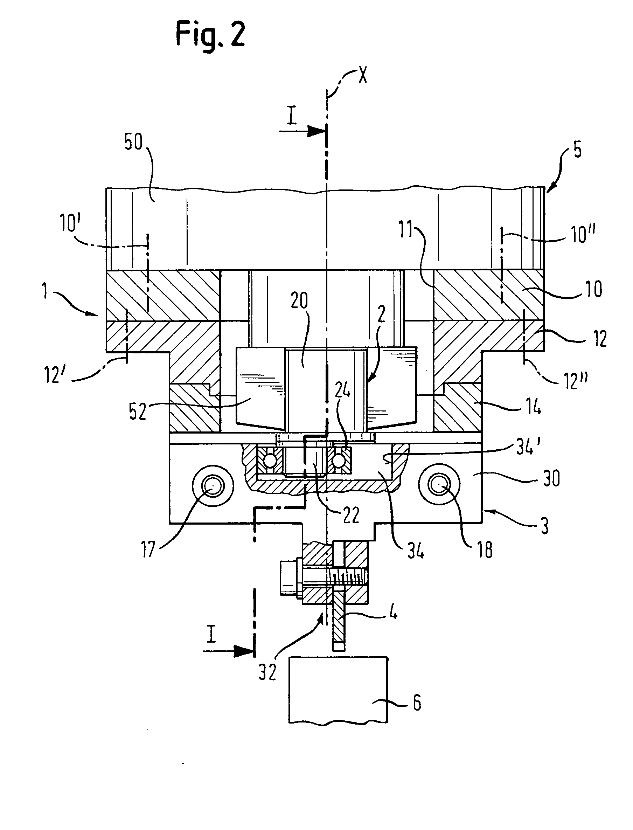

Das Werkzeuggehäuse 1 ist an seinem einen axialen Ende mit einem abnehmbaren Adapterelement 10 versehen, das auf allgemein bekannte Weise, beispielsweise durch Verschrauben, mit einem Hauptkörper 12 des Werkzeuggehäuses 1 verbindbar ist. Am vom Adapterelement 10 abgewandten axialen Ende des Hauptkörpers 12 ist ein Lagerelement 14 angebracht. Das Adapterelement 10, der Hauptkörper 12 und das Lagerelement 14 des Werkzeuggehäuses 1 sind von einer gemeinsamen Axialbohrung 11 durchdrungen. Die Axialbohrung 11 dient zur freien Aufnahme eines Spannfutters einer rotierenden Werkzeugmaschine, wie weiter unten im Zusammenhang mit der Fig. 2 erläutert ist.

Das Lagerelement 14 weist auf seiner vom Hauptkörper 12 abgewandten Seite zwei bezüglich der Rotationsachse X einander gegenübergelegene Lagerschenkel 15, 16 auf, die bei der in Fig. 1 gezeigten Variante des Vorsatzwerkzeugs zur Rotationsachse X leicht geneigt sind. In den Lagerschenkeln 15, 16 sind zwei voneinander seitlich beabstandete Führungsstangen 17, 18, die Lagerschenkel 15, 16 durchdringend, gehaltert. Die Führungsstangen 17, 18 verlaufen zueinander parallel, wobei die jeweilige Längsachse Y' der Führungsstangen 17, 18 bezüglich einer senkrecht auf der Rotationsachse X stehenden Ebene Y unter einem spitzen Winkel α geneigt ist.

Auf den Führungsstangen 17, 18 ist ein Schlitten 30 der Translationseinrichtung 3 entlang der Achsen Y' verschiebbar gelagert. Der Schlitten 30 ist an seinem unteren, vom Lagerelement 14 wegweisenden Ende mit einer Werkzeugaufnahme 32 versehen, in die auf allgemein bekannte Weise das Sägewerkzeug 4 eingesetzt und befestigt ist.

An seinem dem Werkzeuggehäuse 1 zugewandten oberen Ende ist der Schlitten 30 mit einer kulissenartigen Ausnehmung 34 versehen, in die ein Rolle 24 eines Exzenters 22 einsetzbar ist. Der Exzenter 22 ist mit einer in die Axialbohrung 11 hineinragenden Getriebeeingangswelle 20 verbunden und bezüglich der Rotationsachse X der Getriebeeingangswelle 20 exzentrisch versetzt, wie in Fig. 2 zu erkennen ist.

In Fig. 2 ist auch zu erkennen, wie das Vorsatzwerkzeug an einem Grundwerkzeug 50 einer CNC-Maschine angebracht ist, die im gezeigten Beispiel gemeinsam eine Rotationswerkzeugmaschine 5 bilden.

Das Adapterelement 10 ist dazu mit dem Grundwerkzeug 50 verschraubt, wie in Fig. 2 lediglich schematisch durch die gestrichelten Linien 10', 10" dargestellt ist.

In das Spannfutter 52 des Grundwerkzeugs 50 ist, wie in Fig. 2 ebenfalls lediglich schematisch dargestellt ist, die Getriebeeingangswelle 20 des Umlenkgetriebes 2 eingespannt.

Nachdem diese Einspannung der Getriebeeingangswelle 20 erfolgt ist, wird der Rest des Werkzeuggehäuses 1 mit der daran verschiebbar angebrachten Translationseinrichtung 3 und dem an dieser montierten Sägewerkzeug 4 so auf das Grundwerkzeug aufgesetzt, daß die Rolle 24 des Exzenters 22 in die kulissenartige Ausnehmung 34 der Translationseinrichtung 3 eingreift. Daraufhin wird der Hauptkörper 12 an dem mit dem Grundwerkzeug 50 bereits verbundenen Adapterelement 10 auf allgemein bekannte Weise befestigt, beispielsweise durch die schematisch dargestellten Verschraubungen 12', 12".

Ist diese Montage des Vorsatzwerkzeugs am Grundwerkzeug 50 der Rotationswerkzeugmaschine 5 erfolgt, so wird durch angetriebene Rotation des Grundwerkzeugs 50 und dessen Spannfutters 52 die darin eingespannte Getriebeeingangswelle 20 ebenfalls in Rotation versetzt. Der Exzenter 22 rotiert ebenfalls mit der Getriebeeingangswelle 20, wobei er auf einer der Exzentrizität entsprechenden Kreisbahn um die Rotationsachse X läuft. Bei diesem Umlauf wälzt die Rolle 24 des Exzenters 22 auf der inneren Umfangswandung 34' der kulissenartigen Ausnehmung 34 ab, wodurch der Schlitten 30 der Translationseinrichtung 3 entlang der Achse Y' hin- und herbewegt wird. Daraus resultiert eine Hin- und Herbewegung des Sägewerkzeugs 4. Der erforderliche Vorschub des Sägewerkzeugs 4 in Richtung der Rotationsachse X erfolgt dabei durch einen von der Rotationswerkzeugmaschine 5 ausgehenden gleichmäßigen Vorschub des gesamten an dem Grundwerkzeug 50 angebrachten Vorsatzwerkzeugs in Richtung des Werkstücks 6. Da die Längsachse Y' zur Ebene Y um einen Winkel α geneigt ist, wie eingangs beschrieben worden ist, erfolgt bei der Rückbewegung des Sägewerkzeugs 4 ein Abheben des Sägewerkzeugs 4 vom Werkstück 6. Dies ist notwendig um ein Sägen bei der Rückbewegung der Säge, also in falscher Richtung, zu verhindern. Bei α = 0° würde durch die konstante Vorschubbewegung der Werkzeugmaschine das Sägeblatt in beiden Richtungen sägen und sich dadurch zerstören. Bei anderen Werkzeugen kann aber ein Winkel von α = 0° durchaus Anwendung finden.

Anstelle der vorstehend beschriebenen Ausführung des Vorsatzwerkzeugs mit der Adapterplatte 10, kann das Vorsatzwerkzeug auch integral mit dem Grundwerkzeug 50 als eine komplette Einheit (angetriebenes Werkzeug) ausgestaltet sein.

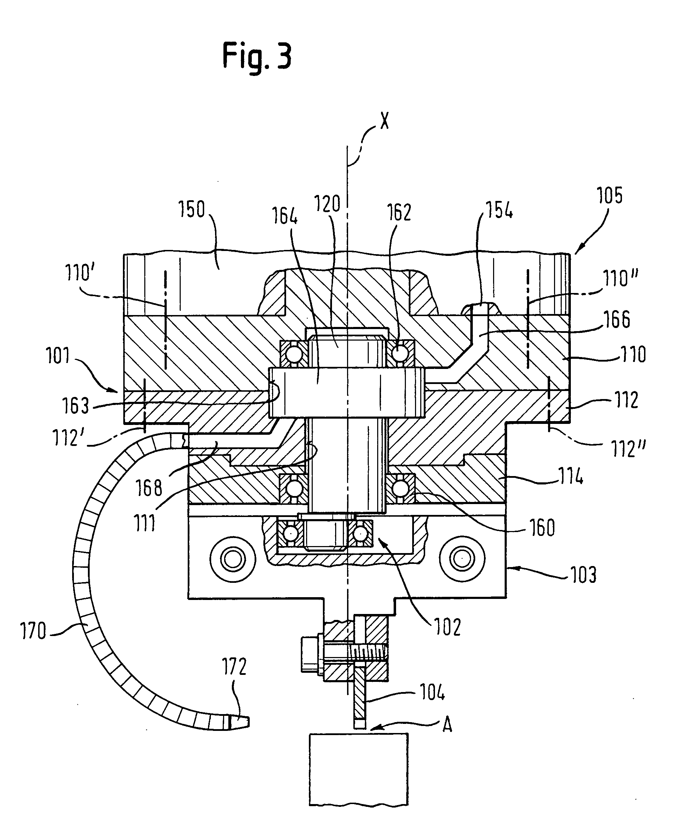

In Fig. 3 ist eine alternative Ausführungsform des erfindungsgemäßen Werkzeugs wiedergegeben, die für Werkzeugmaschinen mit nicht angetriebenem Werkzeughalter vorgesehen ist. Dieses Werkzeug weist einen eigenständigen Antrieb auf, der als Energiequelle die Strömungsenergie des Bearbeitungs- oder Bohrfluids nutzt, welches am Werkzeughalter zur Verfügung steht.

In Fig. 3 sind die Bezugszeichen für Teile, die jenen der Ausführungsform der Fig. 1 und 2 entsprechen, um den Wert 100 erhöht. Die nicht gesondert bezeichneten Teile entsprechen denen der Ausführungsform gemäß Fig. 1 und 2. Das Werkzeuggehäuse 101 ist mit einem abnehmbaren Adapterelement 110 versehen, welches mittels schematisch dargestellter Schraubverbindungen 110', 110" mit dem Grundwerkzeug 150 der Werkzeugmaschine 105 verschraubt ist. Über Schraubverbindungen 112', 112" ist das Adapterelement 110 mit einem Hauptkörper 112 des Werkzeuggehäuses 101 verbunden. Auch bei dieser Ausführungsform ist am vom Adapterelement 110 abgewandten axialen Ende des Hauptkörpers 112 ein Lagerelement 114 angebracht. Die gemeinsame Axialbohrung 111 des Adapterelements 110, des Hauptkörpers 112 und des Lagerelements 114 ist als abgestufte Bohrung ausgebildet, wobei im Lagerelement 114 ein Kugellager 160 in die abgestufte Bohrung eingesetzt ist. Ein weiteres Kugellager 162 ist in die abgestufte Bohrung des Adapterelements 110 eingesetzt. Mit den Kugellagern 160 und 162 ist die Getriebeeingangswelle 120 des Umlenkgetriebes 102 in der gemeinsamen Axialbohrung 111 drehbar im Werkzeuggehäuse 101 gelagert, um auf bereits beschriebene Weise die Translationseinrichtung 103 und mit ihr das Sägewerkzeug 104 anzutreiben.

Zwischen den Kugellagern 160 und 162 ist im Bereich der gegenseitigen Anlageflächen des Adapterelements 110 und des Hauptkörpers 112 durch eine Durchmessererweiterung der Axialbohrung 111 eine Aufnahmekammer 163 für ein Rotationsantriebselement 164 ausgebildet. Die Aufnahmekammer 163 steht über einen im Adapterelement 110 ausgebildeten Fluidversorgungskanal 166 mit einem Fluidversorgungsanschluß 154 in Verbindung, der standardmäßig im Grundwerkzeug 150 vorgesehen ist. Der Fluidversorgungskanal 166 steht am Eintritt in die Aufnahmekammer 163 mit einem - nicht gezeigten - Fluideinlaß des Rotationsantriebselements 164 in Fluidverbindung. Das Rotationsantriebselement 164 ist als Fluidantrieb ausgebildet und weist beispielsweise eine Turbine auf. Der Stator des Rotationsantriebselements 164 ist drehfest in die Aufnahmekammer 163 eingesetzt und der Rotor des Rotationsantriebselelements 164 ist mit der Getriebeeingangswelle 120 drehfest verbunden.

Im Hauptkörper 112 ist ein Fluidauslaßkanal 168 vorgesehen, der in die Aufnahmekammer 163 mündet und dort mit einem - nicht gezeigten - Fluidauslaß des Rotationsantriebselements 164 in Fluidverbindung steht. Der Fluidauslaßkanal 168 tritt am Außenumfang des Hauptkörpers 112 aus und steht dort in Fluidverbindung mit einer flexiblen Fluidleitung 170, die an ihrem freien Ende mit einer Spritzdüse 172 versehen ist, die in bekannter Weise auf den Werkstückbearbeitungsbereich A richtbar ist und diesem Bearbeitungsfluid oder Kühlfluid zuführt.

Bei dieser Ausführungsform wird die von einer in der Werkzeugmaschine vorhandenen Pumpe aufgebaute Strömungsenergie des Bearbeitungsfluids oder des Kühlfluids ausgenutzt, um den Rotationsantrieb 164 des erfindungsgemäßen Werkzeugs und mit ihm das Sägewerkzeug 104 anzutreiben. Dabei wird dem Bearbeitungs- oder Kühlfluid nur soviel Strömungsenergie entzogen, daß der verbleibende Druck und der Fluid-Volumenstrom ausreichend groß sind, um die geforderte Versorgung des Werkstückbearbeitungsbereichs A mit Bearbeitungs- oder Kühlfluid zu gewährleisten.

An Stelle eines Sägewerkzeugs 4, 104 kann auch ein anderes translatorisch arbeitendes Werkzeug vorgesehen sein, wie beispielsweise eine Bürste zum Entgraten oder ein Stoß- oder Räumwerkzeug zum Stoßen oder Räumen von Nuten. Das Rotationsantriebselement 164 kann nicht nur eine Turbine aufweisen, sondern kann alternativ auch aufgebaut sein wie eine umgekehrt arbeitende, das heißt vom Fluid angetriebene, Pumpe, beispielsweise eine Zahnradpumpe oder Drehschieberpumpe.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Translatorisch arbeitendes Werkzeug für eine Rotationswerkzeugmaschine (5), wobei das Werkzeug
- ein Werkzeuggehäuse (1),
- eine um eine Rotationsachse (X) drehbare
Getriebeeingangswelle (20), die mit der
Rotationswerkzeugmaschine (5) zum drehbaren Antrieb koppelbar ist,
- ein von der Getriebeeingangswelle (20) beaufschlagtes
Umlenkgetriebe (2) zur Umlenkung der
Rotationsbewegung der Getriebeeingangswelle (20) in eine Translationsbewegung quer zur Rotationsachse
(X),
- eine vom Umlenkgetriebe (2) beaufschlagte
Translationseinrichtung (3) und
- eine mit der Translationseinrichtung (3) hin und her bewegbare Werkzeugaufnahme (32) für ein translatorisch arbeitendes Werkzeugelement (4)
aufweist,
**dadurch gekennzeichnet ,**
- **daß** die Werkzeugaufnahme (22) so ausgestaltet ist, daß die Werkstück-Bearbeitungsbereiche (40) eines in die Werkzeugaufnahme (32) eingespannten
Werkzeugelements (4) beiderseits der Rotationsachse (X) gelegen sind, so daß eine Bearbeitung eines
Werkstücks (6) beiderseits der Rotationsachse (X) erfolgen kann.

2. Werkzeug nach Anspruch 1,
**dadurch gekennzeichnet , daß** die Bewegungsrichtung der Translationseinrichtung (3) in einer rechtwinklig zur Rotationsachse (X) liegenden Ebene oder zu dieser Ebene (Y) geringfügig geneigt verläuft.

3. Werkzeug nach Anspruch 1 oder 2,
**dadurch gekennzeichnet ,**
- **daß** das Umlenkgetriebe (2) einen von der Getriebeeingangswelle (20) angetriebenen Exzenter (22) aufweist und
- **daß** die Translationseinrichtung (3) einen mit dem Exzenter (22) zusammenwirkenden hin und her bewegbaren Kulissenschlitten (30) aufweist.

4. Werkzeug nach einem der vorhergehenden Ansprüche,
**dadurch gekennzeichnet, daß** das Werkzeug als Vorsatzwerkzeug für ein Rotationswerkzeug ausgebildet ist.

5. Werkzeug nach Anspruch 4,
**dadurch gekennzeichnet , daß** das Werkzeuggehäuse (1) mit einem abnehmbaren Adapterelement (10) versehen ist, das drehfest an der Rotationswerkzeugmaschine (5) anbringbar ist.

6. Werkzeug nach Anspruch 5,
**dadurch gekennzeichnet ,**
- **daß** die Rotationswerkzeugmaschine eine CNC-Maschine ist und ein auswechselbares Grundwerkzeug (50) aufweist und
- **daß** das Adapterelement (10) am Grundwerkzeug (50) drehfest anbringbar ist.

7. Werkzeug nach einem der Ansprüche 4, 5 oder 6,
**dadurch gekennzeichnet , daß** die Getriebeeingangswelle (20) so ausgebildet ist, daß sie in ein Spannfutter (52) der Rotationswerkzeugmaschine, insbesondere des Grundwerkzeugs (50), zur drehbaren Koppelung mit der Rotationswerkzeugmaschine beziehungsweise dem Grundwerkzeug (50) einspannbar ist.

8. Translatorisch arbeitendes Werkzeug für eine Werkzeugmaschine (105), wobei das Werkzeug
- ein Werkzeuggehäuse (101),
- ein Antriebselement,
- eine vom Antriebselement um eine Rotationsachse (X') drehbare Getriebeeingangswelle (120),
- ein von der Getriebeeingangswelle (120) beaufschlagtes Umlenkgetriebe (102) zur Umlenkung der
Rotationsbewegung der Getriebeeingangswelle (120) in eine Translationsbewegung quer zur Rotationsachse (X'),
- eine vom Umlenkgetriebe (102) beaufschlagte Translationeinrichtung (103) und
- eine mit der Translationseinrichtung (103) hin und her bewegbare Werkzeugaufnahme (132) für ein translatorisch arbeitendes Werkzeugelement (104) aufweist,
**dadurch gekennzeichnet ,**
- **daß** die Werkzeugaufnahme (122) so ausgestaltet ist, daß die Werkstück-Bearbeitungsbereiche (140) eines in die Werkzeugaufnahme (132) eingespannten
Werkzeugelements (104) beiderseits der Rotationsachse (X') gelegen sind, so daß eine Bearbeitung eines
Werkstücks (106) beiderseits der Rotationsachse (X') erfolgen kann.

9. Werkzeug nach Anspruch 8,
**dadurch gekennzeichnet , daß** das Antriebselement ein von einem strömenden Bearbeitungs- oder Kühlfluid der Werkzeugmaschine (105) zur Durchführung einer Rotationsbewegung beaufschlagtes Rotationsanstriebselement (164) ist.

10. Werkzeug nach Anspruch 9,
**dadurch gekennzeichnet , daß** das Rotationsantriebselement (164) eine Turbine aufweist.

11. Werkzeug nach Anspruch 9,
**dadurch gekennzeichnet , daß** das Rotationsantriebselement (164) nach Art einer umgekehrt arbeitenden Zahnradpumpe aufgebaut ist.

12. Werkzeug nach Anspruch 9,
**dadurch gekennzeichnet , daß** das Rotationsantriebselement (164) nach Art einer umgekehrt arbeitenden Drehschieberpumpe aufgebaut ist.
